# DEMANDE DE BREVET EUROPEEN

(11) **EP 2 322 972 A1**
(43) Date de publication de la demande: **18.05.2011**
(21) Numéro de dépôt: 10014241.3
(22) Date de dépôt: 03.11.2010
(51) Int. Cl.: G02B 27/01, B60K 35/00

(54) **Dispositif d'affichage, notamment pour véhicule automobile**

(30) Priorité: 12.11.2009 DE 102009053023
(71) Demandeur: Johnson Controls Technology Company, Holland, MI 49423 (US)
(72) Inventeur: Box, Benoit, 95620 Parmain (FR); Croy, Jean-Luc, 94450 Limeil Brevannes (FR); Hervy, Sebastien, 92250 La Garenne Colombes (FR); Bascoul, Pierre, 95000 Cergy (FR); Fedorawiez, Philippe, 78510 Triel sur Seine (FR); Pitte, Giany, 95520 Osny (FR); Luneau, Olivier, 95430 Auvers sur Oise (FR); Prigent, Georges, 72000 Le Mans (FR); Choquart, Pascal, 95800 Cergy Saint Christophe (FR)
(74) Mandataire: Schwöbel, Thilo K.

(57) **Abrégé**

La présente invention concerne un dispositif d'affichage, notamment pour véhicule automobile, comprenant un module de projection pour générer une image en vue d'une projection dans la direction normale de regard d'un utilisateur du dispositif d'affichage selon un chemin optique, le dispositif d'affichage comprenant un élément de réflexion, l'élément de réflexion étant susceptible d'être déplacé entre une multitude de différentes positions d'affichage, les différentes positions d'affichage correspondent à des positions différentes de vue d'un utilisateur du dispositif d'affichage.

## Description

La présente invention concerne un dispositif d'affichage, notamment pour véhicule automobile.

Des dispositifs d'affichage de type à vision tête haute (HUD, head up display) sont connus, notamment avec la projection d'une image vers un pare brise comme décrit dans le document US 5214413 ou vers un élément de réflexion.

Les dispositifs d'affichage à vision à tête haute permettent de projeter une information dans le champ de vision de l'espace devant le véhicule automobile afin que le conducteur du véhicule automobile puisse lire cette information sans quitter des yeux l'espace devant le véhicule automobile. En même temps, l'information peut être lue sans modification de l'accommodation des yeux du conducteur du véhicule.

Il est avantageux que - suivant les besoins d'un utilisateur du véhicule - l'élément de réflexion peut soit être utilisé à plusieurs positions de la tête (ou des yeux) de l'utilisateur du véhicule.

Un Inconvénient de tels dispositifs selon l'art connu consiste dans le fait que le changement de position de l'élément de réflexion n'est pas prévu en fonction d'une hauteur différente (de la position de la tête) de l'utilisateur.

La présente invention a notamment pour but de palier aux inconvénients de l'art connu, et notamment ceux cités ci-dessus, et a également pour but de proposer un dispositif d'affichage à vision à tête haute ayant un élément de réflexion qui peut être réglé de façon à pouvant être adapté à différents hauteurs de la tête de l'utilisateur, le dispositif d'affichage comprenant un mécanisme ayant une grande stabilité et une durée de vie prolongé malgré une utilisation fréquente.

Suivant la présente invention, ce but est atteint par un dispositif d'affichage, notamment pour véhicule automobile, comprenant un module de projection pour générer une image en vue d'une projection dans la direction normale de regard d'un utilisateur du dispositif d'affichage selon un chemin optique, caractérisé en ce que le dispositif d'affichage comprend un élément de réflexion, l'élément de réflexion étant susceptible d'être déplacé entre une multitude de différentes positions d'affichage, les différentes positions d'affichage correspondent à des positions différentes de vue d'un utilisateur du dispositif d'affichage.

De par une telle réalisation d'un dispositif d'affichage, il est avantageusement possible de réaliser le mécanisme de mouvement de l'élément de réflexion de manière simple et stable.

Un autre perfectionnement préféré de l'invention réside dans le fait que élément de réflexion est susceptible d'être positionné, en plus de la multitude de différentes positions d'affichage, dans une position de repos, l'élément de réflexion dans ses différentes positions d'affichage étant prévu dans la direction normale de regard de l'utilisateur, et que lors du déplacement de l'élément de réflexion entre sa position de repos et une de ses différentes positions d'affichage, l'élément de réflexion est soumis à un mouvement translatif.

De par une telle réalisation d'un dispositif d'affichage, il est avantageusement possible d'éliminer ou au moins de réduire le risque d'endommagement de l'élément de réflexion lors celui-ci est dans sa première position de repos.

Un autre perfectionnement préféré de l'invention réside dans le fait que le dispositif d'affichage comprend un moyen de couvercle de l'élément de réflexion, le moyen de couvercle couvrant l'élément de réflexion lorsque celui-ci est positionné dans sa position de repos.

De par une telle réalisation d'un dispositif d'affichage, il est avantageusement possible d'éliminer ou au moins de réduire encore d'avantage le risque d'endommagement de l'élément de réflexion lors celui-ci est dans sa première position de repos.

Un perfectionnement particulièrement préféré de l'invention réside dans le fait qu'entre les différentes positions d'affichage de l'élément de réflexion, l'élément de réflexion est soumis à un mouvement rotatif autour d'un axe de rotation fixe.

De par une telle réalisation d'un dispositif d'affichage, il est avantageusement possible de prévoir le mouvement de l'élément de réflexion de façon simple et mécaniquement stable.

D'après une variante de la présente invention, il est aussi préféré que l'élément de réflexion est entrainé en rotation autour de l'axe de rotation par l'intermédiaire d'un élément moteur rotatif et par l'intermédiaire d'un élément de transmission.

Un autre perfectionnement préféré de l'invention réside dans le fait que l'élément de réflexion est entrainé en rotation autour de l'axe de rotation par l'intermédiaire d'un élément moteur linéaire et par l'intermédiaire d'un élément de transmission.

Un perfectionnement préféré de l'invention réside dans le fait que l'axe de rotation de l'élément de réflexion est une axe physique.

D'autres caractéristiques et avantages de l'invention ressortiront de la lecture de la description qui suit d'un mode de réalisation particulier non limitatif de la présente invention.

### BREVE DESCRIPTION DES DESSINS

L'invention sera mieux comprise grâce à la description ci-après, qui se rapporte à des modes de réalisation préférés, donnés à titre d'exemple non limitatifs et expliqués avec références aux dessins schématiques annexés, dans lesquels :
les figures 1 à 3 sont des vues schématiques d'un élément de réflexion d'un dispositif d'affichage selon une première variante de la présente invention,
la figure 4 est une vue schématique d'un élément de réflexion d'un dispositif d'affichage selon une deuxième variante de la présente invention,
la figure 5 est une vue schématique d'un élément de réflexion d'un dispositif d'affichage selon une troisième variante de la présente invention,
la figure 6 est une vue schématique d'un élément de réflexion d'un dispositif d'affichage selon une quatrième variante de la présente invention,
les figures 7 à 9 et 15 à 17, sont des vues schématiques d'un élément de réflexion d'un dispositif d'affichage selon une cinquième variante de la présente invention,
les figures 10 et 11 sont des vues schématiques d'un élément de réflexion d'un dispositif d'affichage selon une sixième variante de la présente invention,
les figures 12 à 14 sont des vues schématiques de mécanismes pour effectuer un déplacement de l'élément de réflexion d'un dispositif d'affichage selon la présente invention, et
la figure 18 est une vue schématique de section d'un dispositif d'affichage selon la présente invention.

### DESCRIPTION DES DESSINS

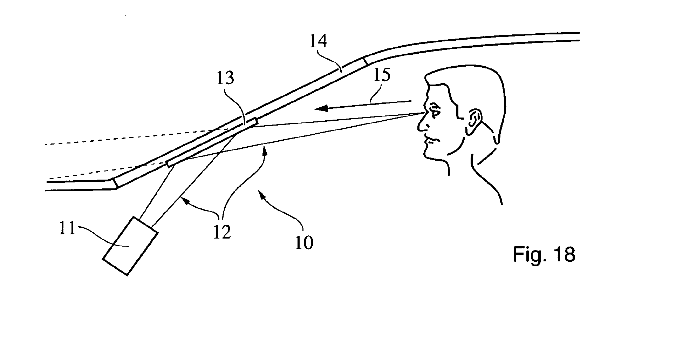

Comme le montre la figure 18 du dessin annexé, un dispositif d'affichage 10 selon la présente invention comprend un module de projection 11 qui génère une image dans la direction normale de regard 15 d'un utilisateur du dispositif d'affichage 10 selon un chemin optique 2.

Le chemin optique 2 comprend normalement au moins un élément de réflexion 13. De cette manière, le chemin optique 12 peut comprendre un élément (unique) de réflexion, comme représenté dans la figure 18. Par ailleurs, le chemin optique 2 peut aussi comprendre deux éléments de réflexion. Le dispositif d'affichage 10 peut aussi comprendre - dans une autre variante non représenté dans les figures - plus de deux éléments de réflexion 13.

La direction normale de regard 15 est la direction de vue d'un utilisateur du dispositif d'affichage 10, notamment un conducteur de véhicule, lorsque celui-ci regarde, notamment à travers un pare brise 14, l'extérieur qui se trouve devant le véhicule.

Selon la présente invention, l'élément de réflexion 13 est un élément positionné en écart par rapport au pare brise 14. Selon un mode de réalisation préféré de la présente invention, l'élément de réflexion 13 peut être positionné dans une position de repos et dans une position d'affichage. Lorsque l'élément de réflexion 13 est positionné dans sa position de repos, l'élément de réflexion 13 est par exemple orienté de manière quasiment horizontale, et lorsque l'élément de réflexion 13 est positionné dans sa position d'affichage, l'élément de réflexion 13 est typiquement positionné debout ou quasiment verticalement de façon à ce que l'utilisateur du dispositif d'affichage puisse regarder à travers l'élément de réflexion 13. Néanmoins, il est aussi possible et préféré selon la présente invention que Lorsque l'élément de réflexion 13 est positionné dans sa position de repos, l'élément de réflexion 13 est orienté de manière quasiment verticale et que le changement de position de la position de repos et la position d'affichage de l'élément de réflexion 13 se fait à travers un mouvement de translation.

Dans la description des figures annexes, l'élément de réflexion 13 est aussi appelé lame ou "blade" et désigné par les signes de référence 2, 2', 2", 2"', 2*, 2**, 2***. Selon toutes les variantes de l'élément de réflexion 13, celui-ci est susceptible d'être positionné dans différentes positions autour d'un axe de rotation, D, D', D", D"', D*, D**, D***. Les différentes positions de l'élément de réflexion 13 correspondent à des positions d'affichage et adaptées à différentes hauteurs de la tête de l'utilisateur. Cela implique que l'angle totale de variation de l'élément de réflexion 13 entre les différentes positions d'affichage est compris dans une plage relativement réduite de quelques degrés ou d'une dizaine ou une quinzaine de degrés, notamment de 2° à 20°, de préférence de 4° à 10°. L'élément de réflexion 13 est entrainé par un élément moteur M, soit directement, soit à travers un élément de transmission 3, 3', 3", 3"', 3*, 3**, 3***. L'élément moteur M peut être un élément moteur linéaire ou un élément moteur rotatif, notamment un élément moteur électrique à pas.

Le changement de position de l'élément de réflexion 13 peut être fait par activation vocale, c'est à dire à travers un signal acoustique. A cette fin, le dispositif d'affichage peut comprendre ou être associé à un dispositif à reconnaissance vocale. Lorsqu'un tel dispositif à reconnaissance vocale reconnaît un certain conducteur (ou utilisateur) du véhicule, l'élément de réflexion 13 peut être positionné dans la position d'affichage idéale pour ce conducteur à l'aide de positions mémorisées.

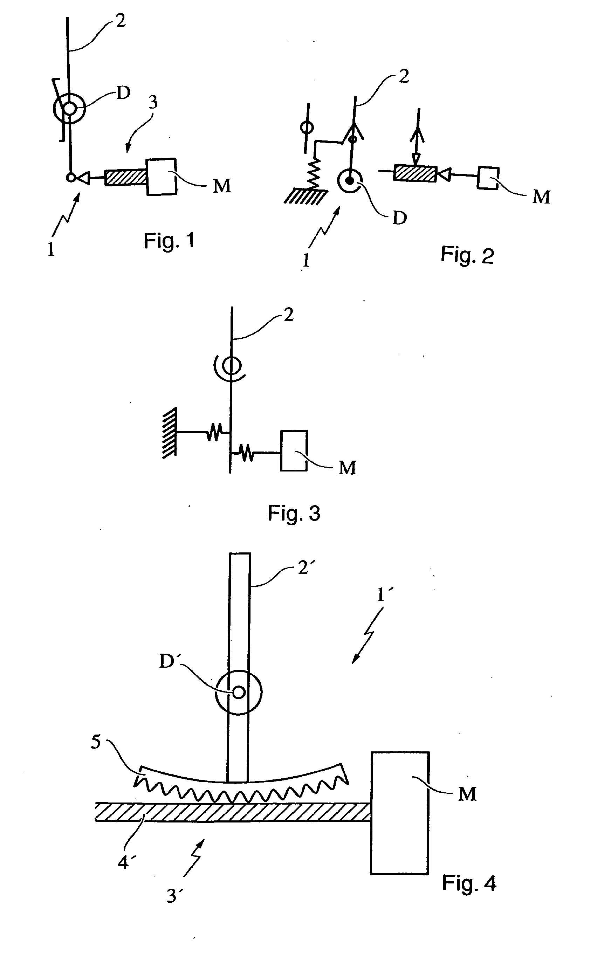

Selon une première variante de la présente invention, représente dans les figures 1 à 3, l'élément de réflexion 2 du dispositif d'affichage 10 est susceptible d'être soumis à un mouvement de rotation autour de l'axe de rotation D par l'élément moteur, l'élément moteur M étant un élément moteur linéaire ou un élément moteur rotatif fonctionnant avec un élément de transmission de type transmission à vis sans fin.

Selon une deuxième variante de la présente invention, représente dans la figure 4, l'élément de réflexion 2' du dispositif d'affichage 10 est susceptible d'être soumis à un mouvement de rotation autour de l'axe de rotation D' par l'élément moteur, l'élément moteur M étant un élément moteur rotatif fonctionnant avec un élément de transmission de type transmission à vis sans fin 4'. Autour de l'axe de rotation D', l'élément de réflexion 2' (ou lame 2') comprend un secteur d'un élément denté 5 correspondant à la vis sans fin 4'.

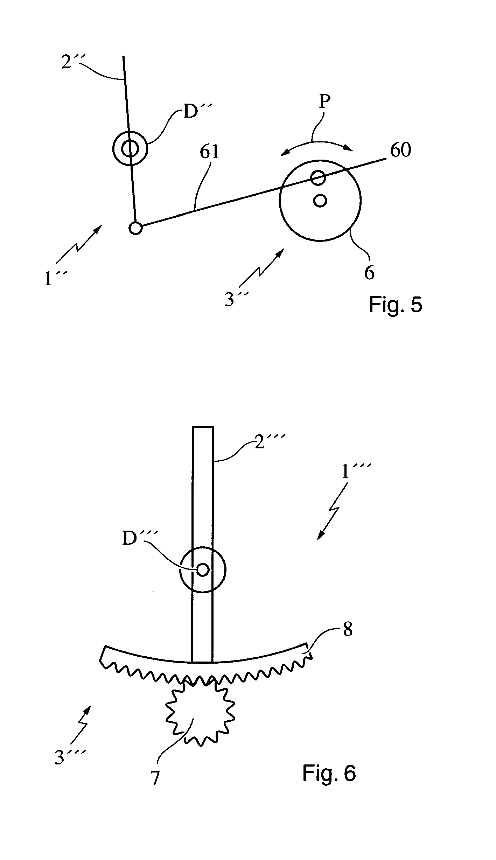

Selon une quatrième variante de la présente invention, représente dans la figure 6, l'élément de réflexion 2"' du dispositif d'affichage 10 est susceptible d'être soumis à un mouvement de rotation autour de l'axe de rotation D"' par l'élément moteur, l'élément moteur étant un élément moteur rotatif fonctionnant avec un élément de transmission de type roue dentée 7. Autour de l'axe de rotation D"', élément de réflexion 2"' (ou lame 2"') comprend un secteur d'un élément denté 3"' correspondant à la roue dentée 7.

Selon une troisième variante de la présente invention, représente dans la figure 5, l'élément de réflexion 2" du dispositif d'affichage 10 est susceptible d'être soumis à un mouvement de rotation autour de l'axe de rotation D" par l'élément moteur, l'élément moteur étant un élément moteur rotatif fonctionnant avec un élément de transmission de type transmission à manivelle (avec un disque 6) avec un maneton 60 et une bielle 61. La bielle 61 est - par exemple - couplée à une fin de l'élément de réflexion 2" (en écart par rapport à l'axe de rotation D").

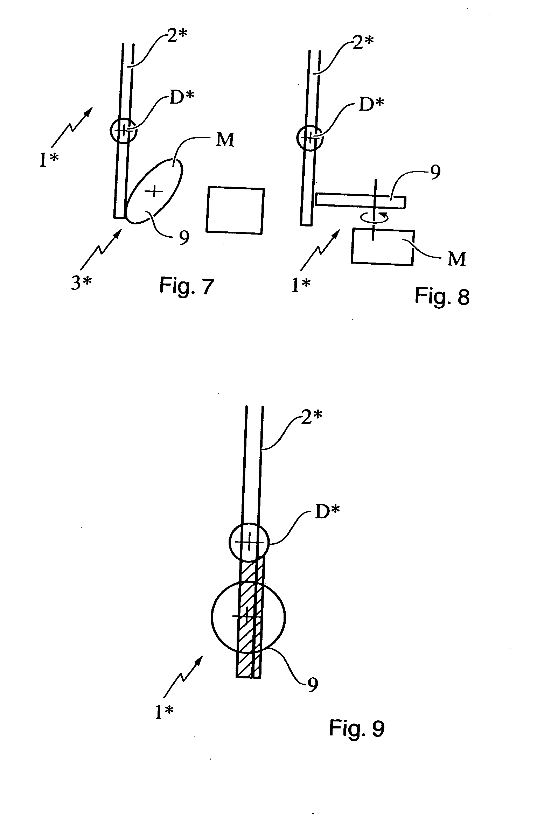

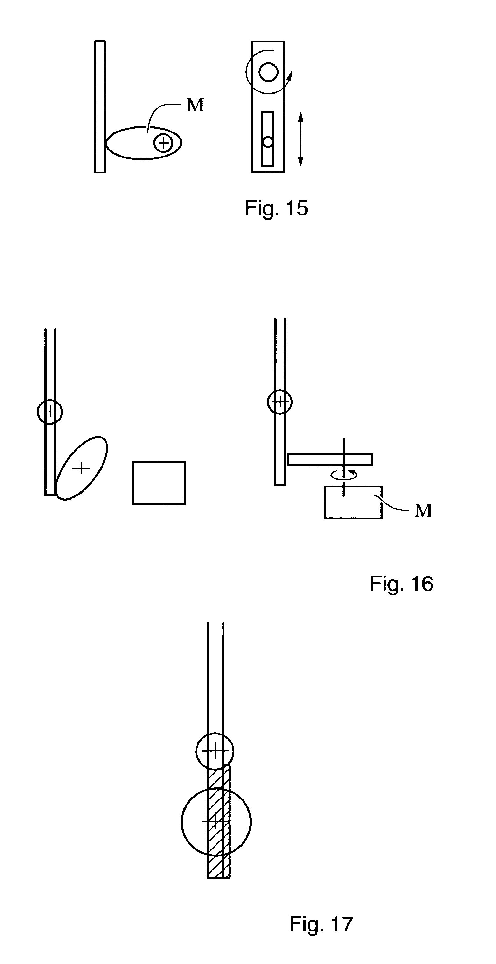

Selon une cinquième variante de la présente invention, représente dans les figures 7 à 9 et 15 à 17, l'élément de réflexion 2* du dispositif d'affichage 10 est susceptible d'être soumis à un mouvement de rotation autour de l'axe de rotation D* par l'élément moteur, l'élément moteur M étant un élément moteur rotatif fonctionnant avec un élément de transmission de type came 9 ou coulisse, la came étant susceptible d'être tournée autour d'un axe de rotation (différente de l'axe de rotation D* de l'élément de réflexion 2*). Selon la variante de la figure 7, l'axe de rotation D* et l'axe de rotation de la came sont prévus parallèles. Selon la variante de la figure 8, l'axe de rotation D* et l'axe de rotation de la came sont prévus orthogonaux. Selon la variante de la figure 9, l'axe de rotation D* et l'axe de rotation de l'élément moteur sont prévus parallèles et une coulisse travaille dans l'élément de réflexion 13.

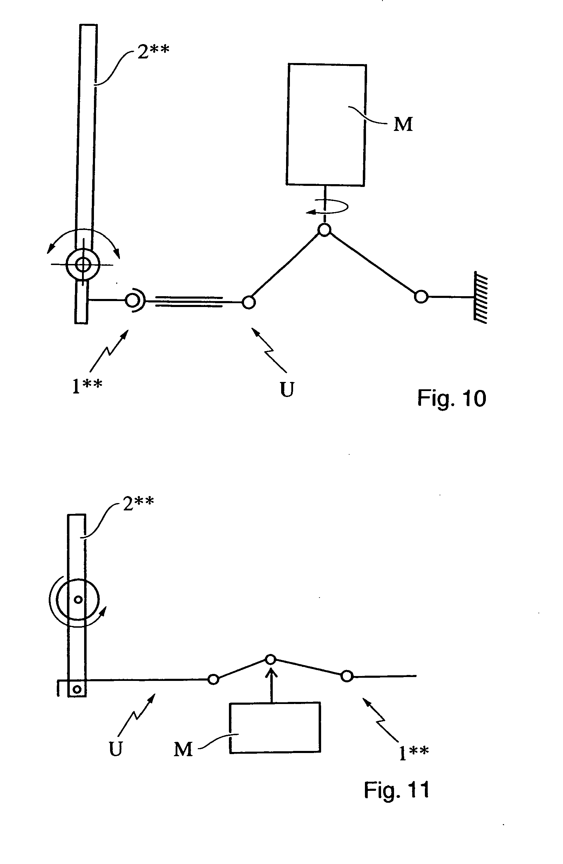

Selon une sixième variante de la présente invention, représente dans les figures 10 et 11, l'élément de réflexion 2** du dispositif d'affichage 10 est susceptible d'être soumis à un mouvement de rotation autour de l'axe de rotation D** par l'élément moteur, l'élément moteur M étant un élément moteur linéaire (figure 11) ou un élément moteur rotatif (figure 10), l'élément moteur produisant un mouvement linéaire et transmis à travers un mécanisme à poulie de déviation U.

Selon une septième variante (non-représentée dans le figures) de la présente invention, l'élément de réflexion 13 est prévu de façon à être susceptible d'être positionné dans une position de repos et une position d'affichage à travers un mécanisme magnétique. Un tel mécanisme comprend un élément magnétique et un élément capable de produire une force magnétique de sorte à entrainer l'élément de réflexion 13. L'élément magnétique peut- par exemple - être un aimant permanent. L'attachement ou la fixation entre l'élément de réflexion 13 et l'élément magnétique peut- par exemple - être réalisé à travers une fixation par emmanchement, une fixation par clip ou par une fixation par moulage.

Selon une huitième variante (non-représentée dans le figures) de la présente invention, un élément cylindrique est utilisé pour réaliser le mouvement de l'élément de réflexion 13. L'élément cylindrique peut - par exemple - être un élément cylindrique électrique dont le mouvement est directement ou indirectement (c'est à dire par un élément de transmission) transmis sur l'élément de réflexion 13.

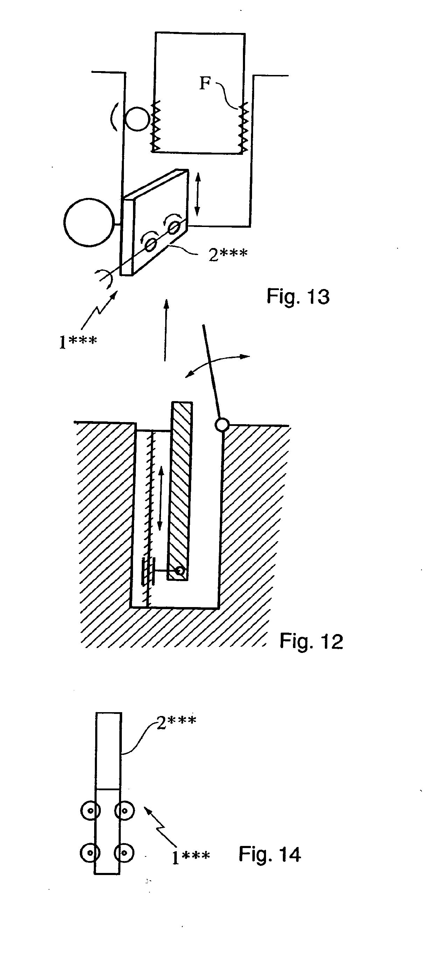

Les mécanismes représentés dans les figures 12, 13 et 14 sont prévus pour réaliser un mouvement vertical de l'élément de réflexion 2***. L'élément de réflexion 2*** comprend au moins un élément de guidage F qui est prévu de façon à interagir avec un élément de transmission pour transmettre le mouvement d'entrainement de l'élément moteur de façon à réaliser le mouvement vertical de l'élément de réflexion 2***. L'élément de guidage F est- par exemple - prévu en tant que barre crantée. Dans ce case, l'élément de transmission est - par exemple - prévu comme une roue dentée. L'élément de guidage F est -par exemple - prévu en tant qu'une coulisse ou rail. L'élément de transmission est - par exemple - prévu comme un rouleau.

### Liste des références

- 10: dispositif d'affichage
- 11: module de projection
- 12: chemin optique
- 13: élément de réflexion
- 14: pare brise
- 15: direction normale de regard

## Revendications

1. Dispositif d'affichage (10), notamment pour véhicule automobile, comprenant un module de projection (11) pour générer une image en vue d'une projection dans la direction normale de regard (15) d'un utilisateur du dispositif d'affichage (10) selon un chemin optique (12), **caractérisé en ce que** le dispositif d'affichage (10) comprend un élément de réflexion (13), l'élément de réflexion (13) étant susceptible d'être déplacé entre une multitude de différentes positions d'affichage, les différentes positions d'affichage correspondent à des positions différentes de vue d'un utilisateur du dispositif d'affichage (10).

2. Dispositif d'affichage (10) selon la revendication 1, **caractérisé en ce que** l'élément de réflexion est susceptible d'être positionné, en plus de la multitude de différentes positions d'affichage, dans une position de repos, l'élément de réflexion (13) dans ses différentes positions d'affichage étant prévu dans la direction normale de regard (15) de l'utilisateur, et que lors du déplacement de l'élément de réflexion (13) entre sa position de repos et une de ses différentes positions d'affichage, l'élément de réflexion (13) est soumis à un mouvement translatif.

3. Dispositif d'affichage (10) selon l'une quelconque des revendications précédentes, **caractérisé en ce que** le dispositif d'affichage (10) comprend un moyen de couvercle de l'élément de réflexion (13), le moyen de couvercle couvrant l'élément de réflexion (13) lorsque celui-ci est positionné dans sa position de repos.

4. Dispositif d'affichage (10) selon l'une quelconque des revendications précédentes, **caractérisé en ce qu'**entre les différentes positions d'affichage de l'élément de réflexion (13), l'élément de réflexion (13) est soumis à un mouvement rotatif autour d'un axe de rotation fixe.

5. Dispositif d'affichage (10) selon l'une quelconque des revendications précédentes, **caractérisé en ce que** l'élément de réflexion (13) est entrainé en rotation autour de l'axe de rotation par l'intermédiaire d'un élément moteur rotatif et par l'intermédiaire d'un élément de transmission.

6. Dispositif d'affichage (10) selon l'une quelconque des revendications précédentes, **caractérisé en ce que** l'élément de réflexion (13) est entrainé en rotation autour de l'axe de rotation par l'intermédiaire d'un élément moteur linéaire et par l'intermédiaire d'un élément de transmission.

7. Dispositif d'affichage (10) selon l'une quelconque des revendications précédentes, **caractérisé en ce que** l'axe de rotation de l'élément de réflexion (13) est une axe physique.
